# EUROPÄISCHE PATENTSCHRIFT

(11) **EP 2 281 435 B1**
(45) Veröffentlichungstag und Bekanntmachung des Hinweises auf die Patenterteilung: **04.09.2013**
(21) Anmeldenummer: 10007338.6
(22) Anmeldetag: 15.07.2010
(51) Int. Cl.: A01D 78/06, A01D 78/10

(54) **Schwaderkombination**
Windrower combination
Combinaison d'andain

(30) Priorität: 28.07.2009 DE 102009034933
(43) Veröffentlichungstag der Anmeldung: 09.02.2011
(73) Patentinhaber: Kverneland AS, 4355 Kvernaland (NO)
(72) Erfinder: Gohl, Stefan, 78244 Gottmadingen (DE); Pauli, Marco, 78532 Tuttlingen (DE)
(74) Vertreter: Grünecker, Kinkeldey, Stockmair & Schwanhäusser

(56) Entgegenhaltungen:
- EP-A1- 0 978 228
- EP-A1- 1 488 679
- EP-A1- 2 047 739
- EP-B1- 1 084 605
- DE-A1- 19 535 453
- DE-A1- 19 603 400
- DE-A1- 19 820 930
- DE-A1-102007 051 188
- DE-B- 1 034 905
- DE-U1- 9 112 331
- DE-U1- 20 109 124
- DE-U1- 29 818 457
- GB-A- 1 472 122

## Beschreibung

Die Erfindung betrifft eine Schwaderkombination gemäß Oberbegriff des Patentanspruchs 1.

Bei der aus EP 0 978 228 A bekannten Schwaderkombination sind in einer Ausführungsform (Fig. 1) die beiden Bandrechen so angeordnet, dass sie die maximale Arbeitsbreite der Schwaderkombination definieren und der in Fahrtrichtung dahinterliegende Mittelschwader das von den Bandrechen nach innen geförderte Erntegut übernehmen und in einem Mittelschwad ablegen. Die beiden Bandrechen sind in Draufsicht auf die Schwaderkombination pfeilförmig angeordnet und werden über Gelenkwellen von einem an den Zapfwellenanschluss des Schleppers angeordneten Antriebsstrang angetrieben, der auch die Schwadkreisel antreibt. Die Tragarme der Bandrechen sind an einem Querträger des Tragbalkens um in Fahrtrichtung orientierte, bodenparallele Achsen schwenkbar und an den innenliegenden Enden der Bandrechen angelenkt. Die Bandrechen weisen jeweils zwei Boden-Nachlaufräder auf. Die Zinken der Bandrechen rotieren um bodenparallele Achsen und müssen das Erntegut nicht nur einwärts fördern, sondern auch mit einer Förderkomponente in Fahrtrichtung. Die Bandrechen sind annähernd tangential zu den Umlaufbahnen der Schwadkreisel orientiert. Aufgrund der pfeilförmigen Anordnung der Bandrechen und der Anlenkung ihrer Tragarme am Querträger beträgt die Länge des Tragbalkens annähernd das 2,5-Fache des Durchmessers der Umlaufbahnen der Schwadkreisel bzw. mehr als die Hälfte der maximalen Arbeitsbreite der Schwaderkombination. Eine Vorgewendestellung mit ausgehobenen Bandrechen lässt sich allenfalls mit zusätzlichem Manipulationsaufwand einstellen. Die große Länge des Tragbalkens und die Gewichtskonzentration am vorderen Tragbalkenendbereich erschweren das Manövrieren in Kurven und bei Transportfahrt. Die Bandrechen sind auch wegen der Bodenlaufräder schwer und ausladend. Eine Verringerung der maximalen Arbeitsbreite mit arbeitenden Bandrechen ist weder insgesamt noch an nur einer Seite des Tragbalkens möglich.

Bei der aus DE 198 20 930 A bekannten Schwaderkombination sind insgesamt vier Kreiselrechen in Fahrtrichtung hintereinander und quer zueinander versetzt vorgesehen, und zwar jeweils zwei auf einer Seite des längsliegenden Tragbalkens. Der jeweils vordere Kreiselrechen an jeder Seite ist an einem Tragarm angeordnet, der über ein Kniegelenk mit im Wesentlichen in Fahrtrichtung orientierter Gelenkachse relativ zueinander knickbare innere und äußere Tragarmabschnitte aufweist, so dass jeder am äußeren Tragarmabschnitt angelenkte, arbeitende Kreiselrechen bodenparallel in etwa quer zur Fahrtrichtung verlagerbar ist.

Bei der aus DE 298 18 457 U bekannten Schwaderkombination ist in der Ausführungsform in Fig. 8 jeder außenseitige Schwadkreisel an einem Querträger angeordnet, der aus einem inneren Querträgerabschnitt und einem äußeren Querträgerabschnitt besteht, die relativ zueinander in einem Kniegelenk mit in etwa in Fahrtrichtung liegender Gelenkachse verschwenkbar sind, und den Schwadkreisel zwischen maximaler und minimaler Arbeitsbreite bodenparallel und in etwa quer zur Fahrtrichtung zu verlagern.

Bei der aus DE 10 2007 051 188 A bekannten Schwaderkombination sind die Schwadkreisel über teleskopierbare und hochschwenkbare Tragarme am Tragbalken angeordnet. Die beiden in der Arbeitsstellung außenseitig platzierten, V-förmig orientierten Bandrechen, deren Zinken um annähernd bodensenkrechte Achsen von Hydromotoren angetrieben sind, sind mit ihren mehrfach abgekröpften, starren Tragarmen auf den äußeren, teleskopierbaren Tragarmabschnitten der Schwadkreisel abgestützt, wobei jeder Tragarm am zum Tragbalken weisenden inneren Ende des Bandrechens angeschlossen ist. Eine ein- oder zweiseitige Verringerung der maximalen Arbeitsbreite in der Arbeitsstellung erfordert bei arbeitenden Bandrechen auch eine Verringerung des Abstandes zwischen den Schwadkreiseln und damit eine Verschmälerung und/oder seitliche Versetzung im abgelegten Mittelschwad. Der Tragbalken ist unverhältnismäßig lang und schwer, wobei die größten Gewichtskräfte auf dem Tragbalken hinter dessen Längsmitte wirken.

Bei dem aus EP 1 084 605 B1 bekannten Ladewagen sind unterhalb des Fahrwerks an beiden Seiten schräggestellte Bandrechen an den innenliegenden Enden abgestützt, um außerhalb der Breite der Aufnahmevorrichtung des Ladewagens auf dem Boden liegendes Erntegut zur Aufnahme durch die Pick-up-Vorrichtung des Ladewagens zusammenzuführen. Die Bandrechen sind in eine ausgehobene und beigeschwenkte Transportstellung in das Fahrwerk einschwenkbar. Die Zinken jedes Bandrechens sind fest auf einem umlaufenden Flachriemen montiert und werden durch einen Hydromotor angetrieben, wobei die Umlaufebene des Flachriemens horizontal mit einer leichten Abwärtsneigung in Fahrtrichtung liegt und jeder Bandrechen entweder seitlich nach vorne oder nach hinten einschwenkbar ist. Um das Erntegut ordnungsgemäß abzulegen, sind an den innenliegenden Enden der Bandrechen stationäre Abstreifer montiert, in die die mit Federwendeln ausgestatteten Zinken einlaufen.

Weiterer Stand der Technik ist enthalten in DE 103 27 884 B4, DE 10 2005 018 987 A, DE 2 356 623 A, DE 1 034 905 A, DE 10 2007 035 407 A1, DE 196 03 400 A1, GB 1 472 122 A, DE 195 35 453, EP 2 047 739 A, DE 201 09 124 U, EP 1 488 679 A und DE 91 12 331 U.

Der Erfindung liegt die Aufgabe zugrunde, eine Schwaderkombination der eingangs genannten Art zu schaffen, die sich durch einen kompakten, technisch einfachen und funktionssicheren Aufbau auszeichnet und einfach eine Veränderung der maximalen Arbeitsbreite mit arbeitenden Bandrechen ermöglicht.

Die gestellte Aufgabe wird mit den Merkmalen des Patentanspruchs 1 gelöst.

Die Unterteilung des Tragarms in die inneren und äußeren Tragarmabschnitte und das Kniegelenk mit im Wesentlichen in Fahrtrichtung orientierter Gelenkachse ermöglichen es, die maximale Arbeitsbreite insgesamt oder falls erforderlich an nur einer Seite zu verändern, ohne Verstellungen am Mittelschwader vornehmen zu müssen, und ermöglichen gleichzeitig das Einstellen einer Vorgewendestellung mit ausgehobenem Bandrechen, und das Überführen des Bandrechens in die voll ausgehobene Transportstellung, wobei dann dank des Kniegelenks die Durchfahrtshöhe von beispielsweise vier Metern bequem einhaltbar und eine stabile Transportstellung möglich sind. Die Bandrechen können nahe den Schwadkreiseln angeordnet werden, so dass sich ein optimal kurzer Tragbalken verwenden lässt, was der Manövrierbarkeit zu gute kommt und das Gesamtgewicht der Schwaderkombination gering halten lässt. Um eine möglichst große Variation der Arbeitsbreite zu ermöglichen, auch zum Umfahren von Hindernissen, ist jeder arbeitende Bandrechen in Kontakt mit dem Erntegut bodenparallel annähernd über die Bandrechenlänge verlagerbar, ohne dabei vom vorderen Tragarm ausgehoben zu werden.

Die Ausbildung des Tragarms mit den inneren und äußeren Tragarmabschnitten und dem Kniegelenk ermöglicht ferner die Verwendung einfacher und effizient wirkender Aktuatoren zur Verstellung der Tragarmabschnitte, wobei diese Aktuatoren für drei Aufgaben gleichermaßen nutzbar sind, nämlich für die Verringerung der maximalen Arbeitsbreite mit Bodenkontakt der Bandrechen, für die Einstellung der Vorgewendestellung, und für das Herstellen der Transportstellung. Soll ein Hindernis umfahren werden, ohne dass der Schlepper mit der Schwaderkombination ein Ausweichmanöver fährt, wird der betroffene arbeitende Bandrechen einwärts verlagert, um das Hindernis zu umfahren. So kann stets ein gerade Schwad abgelegt werden, dessen Breite durch die Einstellung der Schwadkreisel unabhängig von den Arbeitspositionen der Bandrechen wählbar ist. Außerdem kann die Schwaderkombination in Ecken einschwenken und Erntegut erreichen, welches ansonsten aufgrund des Kurvenaußenradius liegenbleiben würde. Wenn jeder Bandrechen in etwa in der Längsmitte an dem Tragarm angelenkt ist, ergibt sich eine gute Bodenanpassung für den Bandrechen und werden einseitige Belastungen in der Anlenkstelle am Tragarm weitestgehend vermieden, so dass Belastungskonzentrationen im Kniegelenk oder in der Anlenkung des Tragarms am Tragbalken moderat ausfallen. Durch die Anlenkung jedes Tragarms annähernd in der Längsmitte des Bandrechens, dessen Zinken um annähernd bodensenkrechte Achsen umlaufen, ergibt sich eine Tragarmlänge, die es ermöglicht, die maximale Arbeitsbreite innerhalb eines erheblichen Bereiches zu verändern, ohne dass der jeweilige Bandrechen seinen Bodenkontakt verliert.

Bei einer zweckmäßigen Ausführungsform ist der innere Tragarmabschnitt länger als der äußere Tragarmabschnitt, einerseits um die Vorgewendestellung mit ausgehobenem Bandrechen bequem einstellen zu können, um in der Transportstellung die Durchfahrtshöhe einzuhalten und dennoch den Bandrechen genügend hoch über dem Boden zu halten, und um die Arbeitsbreite am arbeitenden Bandrechen signifikant ändern zu können.

Zweckmäßig ist der äußere Tragarmabschnitt am Bandrechen an dessen in Fahrtrichtung hinterer Seite angelenkt, so dass der Bandrechen vom Tragarm geschoben wird und zu Bodenanpassung auch die relative Verschwenkbarkeit zwischen den inneren und äußeren Tragarmabschnitten und/oder am Tragbalken nutzen kann. Ferner ist die Anlenkung des äußeren Tragarmabschnitts am Bandrechen dem direkten Einfluss des Ernteguts entzogen.

Bei einer zweckmäßigen Ausführungsform sind die Tragarme und die Bandrechen zumindest weitestgehend senkrecht zur Längsrichtung des Tragbalkens orientiert. Dies spart Länge am Tragbalken ein, und erfordert es von dem Bandrechen nur, das Erntegut ohne Förderkomponente in Fahrtrichtung einwärts zu fördern. Dadurch soll jedoch nicht angeschlossen werden, die Bandrechen V-förmig oder pfeilförmig anzustellen, entweder an den äußeren Tragarmabschnitten oder mit den Tragarmen.

Die Gelenkachsen der Tragarme sind zweckmäßig nicht nur zueinander sondern auch zur Längsrichtung des Tragbalkens parallel, so dass sich beim Verstellen der Bandrechen eindeutige kinematische Verhältnisse ergeben.

Zur Verstellung jedes Tragarms reicht ein Hubzylinder zwischen dem inneren Tragarmabschnitt und dem Tragbalken oder einem Querträger am Tragbalken sowie ein Stützzylinder zwischen den inneren und äußeren Tragarmabschnitten aus. Diese beiden Zylinder sind in der Lage, alle drei Aufgaben (Veränderung der Arbeitsbreite, Einstellen der Vorgewendestellung, Herstellen der Transportstellung) auszuführen, und zwar mit einer einfachen Steuerung.

Dabei sind zweckmäßig der Hubzylinder oberhalb und der Stützzylinder unterhalb des inneren Tragarmabschnittes angeordnet. Diese beiden Zylinder sind zweckmäßig kostengünstige und funktionssichere einfach wirkende Hydraulikzylinder, die an ein gemeinsames Wegesteuerventil angeschlossen sein können und beispielsweise über die Hydraulikvorrichtung des Schleppers gesteuert werden.

In Arbeitsposition des Bandrechens ist dieser zweckmäßig um eine annähernd bodenparallele und parallel zur Längsrichtung des Bandrechens orientierte Stellachse geneigt, so dass die Zinkenumlaufbahn in Fahrtrichtung vorne tiefer liegt als in Fahrtrichtung hinten. Der Bandrechen kann um die Stellachse fixiert oder verstellbar sein, um die Arbeitshöhe verstellen zu können. Die Stellachse kann zwischen dem äußeren Tragarmabschnitt und dem Bandrechen im Bandrechen oder sogar in dem äußeren Tragarmabschnitt untergebracht sein.

Um aufwendige Gelenkwellenverbindungen und Getriebeanordnungen zu vermeiden, wird der Bandrechen zweckmäßig durch einen Hydromotor angetrieben, vorzugsweise aus dem Hydrauliksystem des Schleppers. Um gleiche Fördergeschwindigkeiten und Förderleistungen an den Bandrechen zu erzielen, können die Hydromotoren der Bandrechen entweder in Serie oder über einen Stromteiler parallel geschaltet sein.

Bei einer zweckmäßigen Ausführungsform sind die Hydromotoren drehzahlverstellbar und/oder lastunabhängig steuerbar. Dies kann durch eine Volumenstromregeleinrichtung erfolgen. Ferner kann ein sogenanntes Load-Sensing-System in dem Hydrauliksystem vorgesehen sein, das den Volumenstrom unabhängig von Lastschwankungen konstant hält, z. B. durch ansteuern einer sogenannten Regelpumpe im Hydrauliksystem des Schleppers.

Im Hinblick auf optimale Bodenanpassung des Bandrechens und geringes Gewicht weist jeder Bandrechen unterseitig und beiderseits im Abstand von der Anlenkung des äußeren Tragarmabschnitts starr oder drehbar gelagerte, bombierte Drehteller auf. Im Regelfall reichen zwei Drehteller aus. Dadurch ist auch die Neigung für die Bandrechen minimiert, an Bodenunebenheiten oder Hindernissen hängen zu bleiben, oder den Boden zu gewaltsam zu bearbeiten, da die Drehteller relativ kleine Kontaktflächen haben und sich, falls drehbar, bei Auftreffen auf Unebenheiten daran vorbeidrehen oder darüberdrehen können. Alternativ könnte jeder Bandrechen aber auch Bodenlaufräder besitzen, oder Kufen oder dergleichen.

In einer weiteren Ausführungsform ist auf der Oberseite des Bandrechens ein hochkantstehender Abweiser angeordnet, der verhindert, dass das Erntegut in exzessivem Ausmaß oben üben den Bandrechen hinweggeht. Der Abweiser unterstützt die Förderwirkung der Zinken, wenn er von außen in Richtung zum zum Tragbalken weisenden Ende des Bandrechens schräg gegen die Fahrtrichtung zurückweicht, und, vorzugsweise, nach oben vorne schräg steht.

Bei einer zweckmäßigen Ausführungsform ist am Tragbalken oder dem Querträger ein Verriegelungsmechanismus für den in eine Vorgewendestellung oder eine Transportstellung verstellten inneren Tragarmabschnitt vorgesehen. Der Verriegelungsmechanismus kann, vorzugsweise, hydraulisch oder mechanisch, beispielsweise durch einen Seilzug, betätigbar sein. Zweckmäßig ist ein gemeinsames Verriegelungsglied in dem Verriegelungsmechanismus enthalten, z. B. am Querträger oder am Tragbalken, das wahlweise die Vorgewendestellung oder die Transportstellung definiert, und hydraulisch oder mechanisch verstellbar ist. In der Vorgewendestellung und der Transportstellung können zweckmäßig auch die beiden am Tragarm vorgesehenen Zylinder mitwirken.

Dank der Ausbildung der Tragarme und der Orientierung und Anlenkung der Bandrechen an den Tragarmen braucht die Länge des Tragbalkens nur annähernd der halben maximalen Arbeitsbreite zu entsprechen oder kann sogar kürzer sein, und/oder auch kürzer als der zweifache Außendurchmesser der Umlaufbahnen der Schwadkreisel des Mittelschwaders. Ein derart kurzer Tragbalken verringert das Gesamtgewicht der Schwaderkombination erheblich. Die Gewichtsbelastung im vorderen Endbereich des Tragbalkens erhöht die Achslast an der Hinterachse des Schleppers, was für gute Traktion auch in schwierigem Gelände sorgt. Die Kürze des Tragbalkens verbessert die Manövrierbarkeit der Schwaderkombination in den Arbeitsstellungen, in der Vorgewendestellung und auch in der Transportstellung. Es lässt sich problemlos eine Arbeitsbreite von maximal etwa 12,5 Meter mit Bandrechen erzielen, die etwa 2,3 Meter lang sind, wobei auch bei Kurvenfahrt sichergestellt bleibt, dass die von den Bandrechen gebildeten Teilschwaden ordnungsgemäß von den Schwadkreiseln übernommen werden.

Die Ausbildung der Tragarme der Bandrechen ermöglicht es ferner, mit wenigstens einem einfachen Kraftspeicher, vorzugsweise einer Spiralfeder, den Bodenauflagedruck des Bandrechens einzustellen und konstant zu halten. Dieser Kraftspeicher wird zwischen dem Querträger am Tragbalken oder dem Tragbalken selbst und dem äußeren oder inneren Tragarmabschnitt eingeschaltet, beispielsweise über einen Seilzug oder eine Kette.

Bei einer zweckmäßigen Ausführungsform sind die hinteren Tragarme für die Schwadkreisel längenverstellbar, z.B. um die Breite des endgültig geformten Mittelschwads variieren zu können, und/oder, um in der Transportstellung die vorgeschriebene Durchfahrtshöhe bequem einhalten zu können.

Bei einer zweckmäßigen Ausführungsform ist jeder Schwadkreisel und/oder jeder Bandrechen einzeln betreibbar bzw. sind beide Schwadkreisel betreibbar, während die Bandrechen in Transportstellung verbleiben und ihr Antrieb abgeschaltet ist. Abhängig beispielsweise von der bearbeiteten Parzellenform kann auch nur einer der beiden Bandrechen vor dem Mittelschwader arbeiten, während der andere in der Transportstellung ist, und, gegebenenfalls, abgeschaltet wird.

Zweckmäßig ist für die Fahrt am Vorgewende eine Folgesteuerung für die vorderen und hinteren Tragarme vorgesehen. Diese Folgesteuerung kann bewirken, dass der jeweilige Bandrechen vor dem dahinterliegenden Schwadkreisel ausgehoben und vor dem Absenken des dahinterliegenden Schwadkreisels abgesenkt wird.

Ferner ist es zweckmäßig, zwischen jedem Bandrechen und dem dahinter arbeitenden Schwadkreisel ein querliegendes Schwadblech anzuordnen, um eine möglichst bodennahe Übergabe des Erntegutes vom Bandrechen zum Schwadkreisel zu gewährleisten. Dieses Schwadblech ist gegebenenfalls in seiner Wirklänger quer zur Fahrtrichtung verstellbar und/oder einwärts entgegen der Fahrtrichtung schräggestellt. So lassen sich Erntegut-Verluste effizient vermeiden.

Bei einer zweckmäßigen, alternativen Ausführungsform jedes vorderen Tragarmes ist zur Steuerung der inneren und äußeren Tragarmabschnitte, insbesondere des äußeren Tragarmabschnittes, zwischen dem Tragbalken oder dem Querträger und dem inneren Tragarmabschnitt als Aktuator ein Hubzylinder angeordnet, und wird zwischen dem Tragbalken oder dem Querträger und dem äußeren Tragarmabschnitt eine Steuerstange angelenkt. Die Steuerstange schwenkt den äußeren Tragarmabschnitt in Abhängigkeit von der Schwenkung des inneren Tragarmabschnittes am Tragbalken, beispielsweise um den Bandrechen bodenparallel zu verlagern. Vorzugsweise ist hierbei der äußere Tragarmabschnitt mit einer Kröpfung beim Kniegelenk ausgebildet, an der die am inneren Tragarmabschnitt über einen Steuerhebel geführte Steuerstange über einen Schwenkhebel angelenkt ist. Der Steuerhebel und der Schwenkhebel erzeugen eine kontrollierte Bogenbewegung der Kröpfung des äußeren Tragarmabschnittes mit günstigen Wirkhebelarmen. Hierbei kann ein steuerbarer Stützzylinder für den äußeren Tragarmabschnitt entfallen, was zu einer günstigen Gewichtsverteilung und Vereinfachung des Hydrauliksystems beiträgt.

Anhand der Zeichnung werden Ausführungsformen des Erfindungsgegenstandes erläutert. Es zeigen:
- Fig. 1: eine schematische Draufsicht auf eine an einen Schlepper angehängte Schwaderkombination,
- Fig. 2: eine schematische Ansicht in oder entgegengesetzt zur Fahrtrichtung einer Tragarmausbildung für einen Bandrechen, in einer Arbeitsposition,
- Fig. 3: eine schematische Perspektivdarstellung eines Bandrechens,
- Fig. 4 und 5: zwei beispielhafte Blockschaltbilder zur Verschaltung von Hydromotoren der Bandrechen,
- Fig. 6: ein Detail der Tragarmausbildung mit einem Verriegelungsmechanismus, wobei die Tragarmausbildung in einer Vorgewendestellung der Schwaderkombination gezeigt ist, und
- Fig. 7: eine andere Ausbildung der vorderen Tragarme.

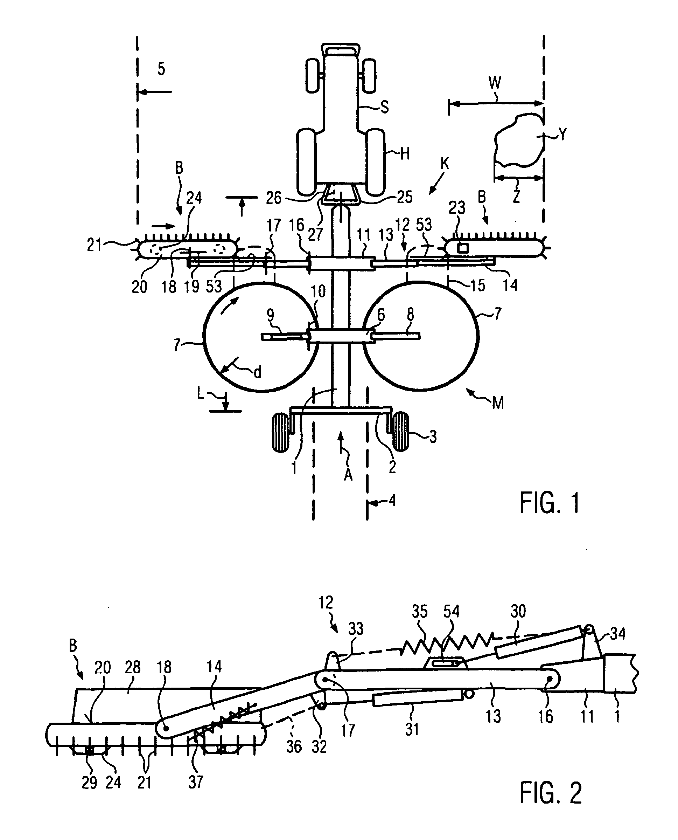

Eine in Fig. 1 in Draufsicht gezeigte Schwaderkombination K besteht aus einem Mittelschwader M und zwei Bandrechen B. Die Schwaderkombination K enthält einen längsliegenden Tragbalken 1 mit einem Querbalken 2 am in Fahrtrichtung A hinten liegenden Ende. Am Querbalken 2 sind Laufräder 3 eines Fahrwerks angeordnet. Der in Arbeitsfahrtrichtung hinter den Bandrechen B am Tragbalken 1 angeordnete Mittelschwader M weist beispielsweise links und rechts des Tragbalkens 1 je einen Schwadkreisel 7 mit einem Außendurchmesser d seiner Zinkenumlaufbahn (gesteuerte oder ungesteuerte Zinken) auf. Die beiden Schwadkreisel 7 bilden einen Mittelschwad 4, beispielsweise zwischen den Bodenlaufrädern 3, wenn die Schwaderkombination K von einem Schlepper S in Arbeitsfahrtrichtung A geschleppt wird. Der Tragbalken 1 ist um eine bodensenkrechte Achse 25 schwenkbar an einer Dreipunkthebevorrichtung 26 des Schleppers S angeschlossen, der ein Hydrauliksystem H enthält, sowie einen Zapfwellenanschluss 27, beispielsweise zum Antreiben der Schwadkreisel 7.

Für den Mittelschwader M ist am Tragbalken 1 ein Querträger 6 stationär angebracht, an welchem hinteren Tragarme 8 um annähernd zur Längsrichtung des Tragbalkens 1 parallele Gelenke 10 schwenkbar sind. Die hinteren Tragarme 8 können, wie bei 9 angedeutet, teleskopierbar sein, um den Abstand zwischen den Schadkreiseln 7 zu verstellen und/oder bei hochgeschwenkten hinteren Tragarmen 8 (Transportstellung der Schwadkreisel 7) die vorgeschriebene Durchfahrtshöhe einzuhalten.

In Fahrtrichtung A vor dem Mittelschwader M kann am Tragbalken 1 ein Querträger 11 stationär angebaut sein, an welchem links und rechts des Tragbalkens 1 vor den Tragarmen 12 um annähernd parallel zur Längsrichtung des Tragbalkens 1 liegenden Schwenkachsen 16 mit schwenkbar sind. Die vorderen Tragarme 12 stehen beispielsweise im Wesentlichen senkrecht zur Längsrichtung des Tragbalkens 1. Jeder vordere Tragarm 12 ist in einen inneren Tragarmabschnitt 13 und einen äußeren Tragarmabschnitt 14 unterteilt, wobei zwischen den Tragarmabschnitten 13, 14 ein Kniegelenk mit ebenfalls im Wesentlich zur Längsrichtung des Tragbalkens 11 orientierter Gelenkachse 17 vorgesehen ist. Jeder äußere Tragbalkenabschnitt 14 ist in einem Gelenk 18 z.B. in etwa in der Längsmitte des Bandrechens B am Bandrechen B angelenkt, wobei diese Gelenkachse auch im Wesentlichen parallel zur Längsrichtung des Tragbalkens 1 ist. Der Bandrechen B ist, zumindest in der gezeigten Ausführungsform, im Wesentlichen senkrecht zur Längsrichtung des Tragbalkens 1 orientiert, weist ein Gehäuse 20 auf, und Zinken 21, die in einer elliptischen Umlaufbahn mit annähernd bodensenkrechten Achsen in Richtung des Pfeils angetrieben werden, derart, dass sie innerhalb einer maximalen Arbeitsbreite 5 Emtegut nach innen fördern jeweils einen Teilschwad 15 dem Schwadkreisel 7 vorlegen, vorzugsweise unterstes Teil durch je ein im Wesentlichen quer orientiertes Schwadblech 53.. Der Bandrechen B kann um eine Stellachse 19 relativ zum äußeren Tragarmabschnitt 14 schräggestellt und in seiner Schräglage verstellbar sein, wobei die Stellachse 19 parallel zum äußeren Tragarmabschnitt 14 orientiert ist, und sich entweder im Gehäuse 20, zwischen dem Gehäuse 20 und dem äußeren Tragarmabschnitt 14 oder im äußeren Tragarmabschnitt 14 befindet. Jeder Bandrechen B enthält als Antriebsquelle wenigstens einen Hydromotor 23. Ferner sind an den Unterseiten der Gehäuse 20 der Bandrechen B starre oder drehbare und bombierte Drehteller 24 angeordnet, die mit dem Boden in Kontakt sind.

Die maximale Arbeitsbreite 5 beträgt etwa 12,5 Meter. Die Weite W jedes Bandrechens B beträgt etwa 2,3 Meter. Die Länge L des Tragbalkens 1 beträgt etwa die Hälfte der maximalen Arbeitsbreite und/oder weniger als das Zweifache des Außendurchmessers d.

Alternativ könnte jeder Bandrechen B auch am innenliegenden Ende am äußeren Tragarmabschnitt 14 angelenkt sein, oder an jeder beliebigen Stelle außerhalb der Längsmitte.

Fig. 2 deutet bei 29 die Drehlagerung jedes Drehtellers 24 an der Unterseite des Gehäuses 20 an. Auf dem Gehäuse 20 ist oberseitig ein Abweiser 28 im Wesentlichen hochkantstehend angeordnet oder etwas nach vorne geneigt, der sich zumindest bis zum zum Tragbalken 1 weisenden inneren Ende des Gehäuses 20 erstreckt. Am äußeren Tragarmabschnitt 14 ist unterseitig ein Lagerbock 32 und am inneren Tragarmabschnitt außen ein Lagerbock 33 angeordnet. Vom äußeren Tragarmabschnitt 14 erstreckt sich z. B. eine Spiralfeder 37 zum Gehäuse 20 des Bandrechens B, wobei die Feder 37 im Abstand von der Anlenkachse 18 an das Gehäuse 20 angeschlossen ist. Ferner kann zwischen dem innenliegenden Ende des Gehäuses 20 und dem Lagerbock 32 eine entweder permanente oder nur bedarfsweise festlegbare Anlenkung 36 vorgesehen sein. Um einen bestimmten Bodenauflagedruck für den Bandrechen B in der Arbeitsstellung einzustellen und diesen im Wesentlichen konstant zu halten, ist ein Kraftspeicher 35 beispielsweise in Form einer Spiralfeder zwischen einer Lagerkonsole 34 am Querträger 11 und dem Lagerbock 33 am inneren Tragarmabschnitt 13 nahe dem Kniegelenk vorgesehen. Der Lagerbock 33 könnte gegebenenfalls am äußeren Tragarmabschnitt 14 angeordnet sein.

Zur Steuerung der relativen Bewegungen der inneren und äußeren Tragarmabschnitte 13, 14 bzw. des vorderen Tragarms 12 ist ein Hubzylinder 30 oberhalb des inneren Tragarmabschnittes 13 zwischen dem Querträger 11 und einer Langlochführung 54 in etwa der Längsmitte des inneren Tragarmabschnittes 13 eingesetzt, während an der Unterseite des inneren Tragarmabschnittes 13 ein Stützzylinder 31 abgestützt ist, der am Lagerbock 32 des äußeren Tragarmabschnittes 14 angreift. Die beiden Zylinder 30, 31 sind, vorzugsweise, einfach wirkende Hydraulikzylinder, die so druckbeaufschlagbar sind, dass bei Druckbeaufschlagung des Hubzylinders 30 in Fig. 2 dessen Kolbenstange eingezogen wird und im Stützzylinder 31 dessen Kolbenstange auch eingefahren wird. Der äußere Tragarmabschnitt 14 ist kürzer als der innere Tragarmabschnitt 13, und z.B. geringfügig kürzer als die Länge des Bandrechens B. Falls zweckmäßig, können mehr als zwei Drehteller 24 an jedem Bandrechen B vorgesehen sein.

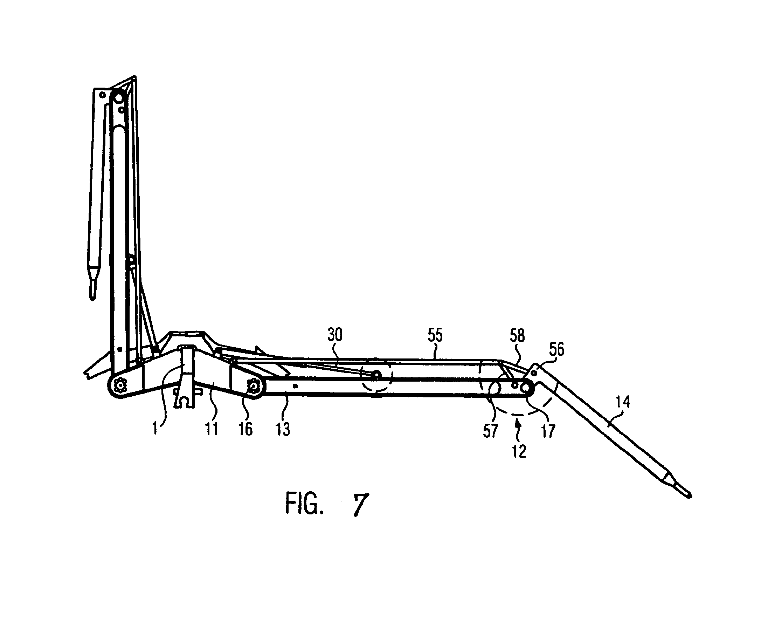

Beispielsweise wird zur Verminderung der maximalen Arbeitsbreite 5 der Hubzylinder 30 druckbeaufschlagt, so dass der innere Tragarmabschnitt 13 um die Schwenkachse 16 angehoben wird. Dabei wird der Stützzylinder 31 druckentlastet, so dass der äußere Tragarmabschnitt 14 im Kniegelenk 17 in Fig. 2 unter der Gewichtslast entgegen dem Uhrzeigersinn schwenkt und der Bandrechen R in Bodenkontakt bleibt, z.B. über einen Bereich annähernd entsprechend der Länge des Bandrechens B. Sobald danach der innere Tragarmabschnitt 13 noch weiter hochgeschwenkt wird, hebt der Stützzylinder 31 beispielsweise über eine Drosselanordnung den Bandrechen B vom Boden ab und wird gegebenenfalls die Druckbeaufschlagung blockiert, um die Schwaderkombination am Vorgewende zu wenden. Zuerst werden über eine Folgesteuerung die Bandrechen B und nachfolgend erst die Schwadkreisel 7 ausgehoben, und in gleicher Folge später wieder abgesenkt. Der innere Tragarmabschnitt 13 kann schließlich bis in eine annähernd vertikale Stellung hochgeschwenkt werden (Transportstellung ähnlich Fig. 7, links) wobei sowohl der Hubzylinder 30 als auch Stützzylinder 31 auf Anschlag kommen können, und der äußere Tragarmabschnitt 14 annähernd vertikal hängt. Der Bandrechen B hängt dann annähernd vertikal am äußeren Tragarmabschnitt 14.

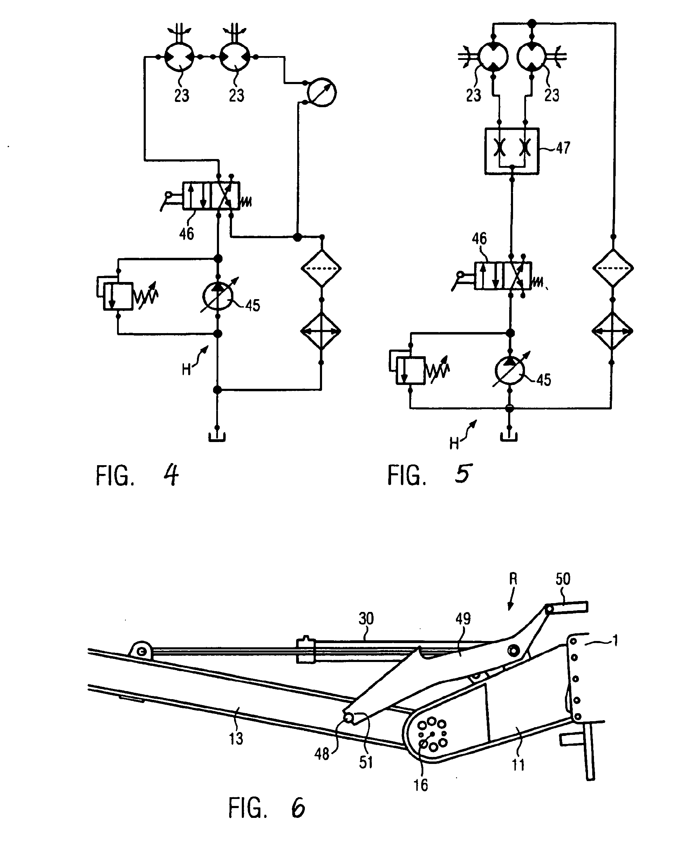

In der Vorgewendestellung und der Transportstellung kann der innere Tragarmabschnitt 13 verriegelt werden, beispielsweise mit einem Verriegelungsmechanismus gemäß Fig. 6, der später erläutert wird.

Um den Bandrechen B aus der Transportstellung wieder in die Arbeitsstellung zu überführen, wird beispielsweise der Hubzylinder 30 zunächst bis zum Lösen der Verriegelung mit Druck beaufschlagt, und wird nachfolgend umgeschaltet, so dass der eingefahrene Stützzylinder 31 auszufahren beginnt. Dies verlagert den Schwerpunkt und die Anlenkachse 18 nach außen, so dass sich der innere Tragarmabschnitt 13 selbsttätig bis in eine Endposition absenkt, ehe der äußere Tragarmabschnitt 14 entsprechend ausgeschwenkt wird.

Der Hubzylinder 30 und/oder der Stützzylinder 31 könnten alternativ auch doppelseitig beaufschlagbar ausgebildet sein.

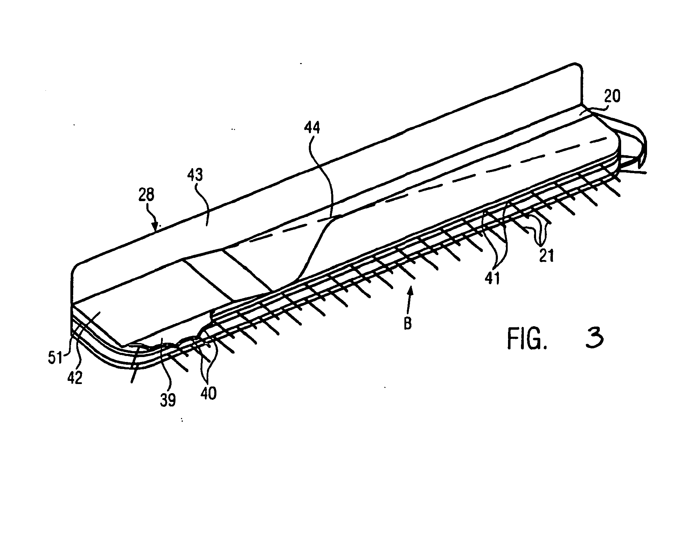

Fig. 3 zeigt in einer Perspektivansicht schräg entgegengesetzt zur Fahrtrichtung den linken Bandrechen B von Fig. 1. Das Gehäuse 20 weist eine Deckplatte 42 auf, auf der der Abweiser 28 in Form eines Blechs 43 hochkantstehend angeordnet ist. Gestrichelt ist bei 44 angedeutet, dass das Blech 43 nicht parallel zur Längsrichtung des Bandrechens B angeordnet zu sein braucht, sondern alternativ so schräg orientiert ist, dass es nach innen zum zum Tragbalken 1 weisenden Ende des Bandrechens B entgegengesetzt zur Fahrtrichtung schräg zurückweicht. Die Zinken 21 (beispielsweise jeweils zwei übereinander liegende Zinken 21) sind mit Federwendeln 41 an einem nicht gezeigten Band angebracht, das vom in Fig. 3 nicht gezeigten Hydromotor zu einer im Wesentlichen elliptischen Umlaufbewegung angetrieben wird.

Am zum Tragbalken 1 weisenden inneren Ende des Bandrechens B kann ein stationäres Abweisblech 51 montiert sein, durch das die Zinken 21 durchlaufen. Ferner ist am innenliegenden Ende des Bandrechens B oberhalb der Zinken 21 ein Abstreifteller 39 mit umfangsseitigen Vorsprüngen 40 (gerundeten Erhebungen mit dazwischen liegenden gerundeten Tälern) angeordnet und beispielsweise vom Hydromotor des Bandrechens B drehangetrieben. Die Umfangsgeschwindigkeit des, vorzugsweise aus Kunststoff bestehenden, Abstreiftellers 39 kann der Bewegungsgeschwindigkeit der Zinken 21 entsprechen oder höher oder niedriger sein als diese. Ein Teilsegment des Abstreiftellers 39 steht unter dem Abdeckblech 42 in Arbeitsfahrtrichtung A nahezu so weit vor, wie die freien Enden der Zinken 21. Die Drehteller 24 befinden sich relativ weit außen nahe bei den Längsenden des Bandrechens B.

In den Fig. 4 und 5 werden zwei beispielhafte hydraulische Verschaltungen für die Hydromotoren 23 der beiden Bandrechen B gezeigt. Die Hydromotoren 23 werden aus dem Hydrauliksystem H des Schleppers gespeist, zweckmäßig über eine Verstellpumpe 45 und ein Wegeventil 46 (2/2-Wegeventil mit Handbetätigung oder Magnetbetätigung gegen eine Feder).

Um die beiden Hydromotoren 23 mit gleichen Drehzahlen anzutreiben, sind gemäß Fig. 4 beide Hydromotoren 23 in Reihe geschaltet, während sie in Fig. 5 über einen Stromteiler 47 parallel geschaltet sind. Der die Drehgeschwindigkeit und Leistung der Hydromotoren 23 bestimmende Volumenstrom wird beispielsweise über die Verstellpumpe 45 eingestellt und kann bedarfsabhängig variiert werden. Um im Betrieb jedes Bandrechens B Lastunabhängigkeit zu erzielen, kann das Hydrauliksystem H mit einer nicht dargestellten Load-Sensing-Einrichtung versehen sein, die die Förderleistung der Verstellpumpe 45 bei zunehmender Last erhöht und bei abnehmender Last reduziert. Bei einer nicht gezeigten Alternative könnten die Drehzahlen und Leistungen der beiden Hydromotoren 23 individuell gesteuert und geregelt oder abgeschaltet werden, beispielsweise über einen verstellbaren Mengenteiler 47, der die Volumenströme für beide Hydromotoren 23 individuell ändern lässt.

Fig. 6 zeigt einen Verriegelungsmechanismus R für den inneren Tragarmabschnitt 13. Der Verriegelungsmechanismus R enthält ein beispielsweise am Querträger 11 schwenkbar gelagertes Verriegelungsglied 49, das entweder über einen Hydraulikzylinder 50 oder einen (nicht gezeigten) Seilzug verschwenkbar ist. Am inneren Tragarmabschnitt 13 ist ein Anschlagbolzen 48 angeordnet, der wahlweise mit einer Verriegelungskerbe 51 oder einer Verriegelungskerbe 52 am Verriegelungselement 49 zusammenwirkt. In Fig. 6 ist beispielsweise die Vorgewendestellung hergestellt, in der der innere Tragarmabschnitt 13 durch Eingriff des Anschlagbolzens 48 in die Verriegelungskerbe 51 und unter der Zugwirkung des Hubzylinders 30 so festgelegt ist, dass der Bandrechen B etwa ausgehoben wird.

Soll in Fig. 6 der innere Tragarmabschnitt 13 noch weiter in die Transportstellung hochgeschwenkt werden (durch den Hubzylinder 30), wird zunächst die Druckbeaufschlagung des Hubzylinders 30 etwas vermindert, bis der innere Tragarmabschnitt 13 unter Gewichtslast absinkt und der Anschlagbolzen 48 aus der Verriegelungskerbe 51 austritt. Dann wird das Verriegelungselement 49 beispielsweise entgegen dem Uhrzeigersinn verschwenkt. Der Hubzylinder 30 wird wieder druckbeaufschlagt, bis der innere Tragarmabschnitt 13 eine annähernd vertikale Position erreicht hat, und dabei der Anschlagbolzen 48 über die Oberseite des Verriegelungselementes 49 gefahren und in die Verriegelungskerbe 52 eingefallen ist. Dann ist der innere Tragarmabschnitt 13 blockiert. Um den inneren Tragarmabschnitt 13 wieder absenken zu können, wird in der Transportstellung zunächst der Hubzylinder 30 kurzzeitig druckbeaufschlagt, um den Anschlagbolzen 48 aus der Verrieglungskerbe 52 zu lösen. Dann wird das Verriegelungselement 49 entgegen dem Uhrzeigersinn verschwenkt, z. B. mittels des Hydraulikzylinders 50, und wird der in Fig. 6 nicht gezeigte Stützzylinder 31 beaufschlagt, um den äußeren Tragarmabschnitt 14 nach außen zu schwenken, so dass die Gewichtsbelastung am Hubzylinder 30 zunimmt und dessen Kolbenstange unter der Gewichtsbelastung ausfährt, wobei der Verriegelungsbolzen 48 am Verriegelungselement 49 vorbeigeführt wird und sich der innere Tragarmabschnitt 13 um die Schwenkachse 16 senkt, und zwar, vorzugsweise, bis in eine untere Endstellung, ehe der Stützzylinder 31 voll ausgefahren wird.

Bei einer in Fig. 7 gezeigten Ausbildung des Tragarms 12 kann der Stützzylinder 31 weggelassen werden, wobei zur Steuerung des äußeren Tragarmabschnitts 14 eine oberhalb des inneren Tragarmabschnittes 13 liegende, am Querträger 11 und an einem Steuerhebel 57 und einem Schwenkhebel 58 angelenkte Steuerstange 55 vorgesehen ist. Der Steuerhebel 57 ist in der Nähe der Gelenkachse 17 im Abstand an dessen zum Querträger 11 weisender Seite am inneren Tragarmabschnitt 13 schwenkbar angelenkt, während der Schwenkhebel 58 am äußeren Tragarmabschnitt 14 und im Abstand von der Gelenkachse 17 an einer Kröpfung 56 angelenkt ist. Die relative Schwenkbewegung des äußeren Tragarmabschnittes 14 wird so in Abhängigkeit von der Schwenkbewegung des inneren Tragarmabschnitts 13 um die Schwenkachse 16 gesteuert, derart, dass in der Transportstellung mit etwa vertikal hochgeschwenktem inneren Tragarmabschnitt 13 der äußere Tragarmabschnitt 14 nahe zum inneren Tragarmabschnitt 13 beigezogen ist, hingegen in den Arbeitsstellungen mit dem inneren Tragarmabschnitt 13 einen stumpfen Winkel einschließt, derart, dass sich der Bandrechen B im Bodenkontakt, z.B. ca. 1.0 Meter unterhalb der Ebene des Tragbalkens 1, befindet.

## Patentansprüche

1. Schwaderkombination (K), insbesondere zum Heckanbau an einen Schlepper (S), mit einem in Fahrtrichtung (A) orientierten Tragbalken (1), an dem in Fahrtrichtung vorne links und rechts außenliegende Bandrechen (B) über zumindest hochschwenkbare vordere Tragarme (12) zumindest in etwa quer zur Fahrtrichtung (A) ausgerichtet und in Fahrtrichtung dahinterliegend ein Mittelschwader (M) mit links und rechts am Tragbalken (1) über zumindest hochschwenkbare hintere Tragarme (8) angeschlossenen Schwadkreiseln (7) angeordnet sind, **dadurch gekennzeichnet, dass** jeder vordere Tragarm (12) über ein Kniegelenk mit im Wesentlichen in Fahrtrichtung (A) orientierter Gelenkachse (17) relativ zueinander knickbare innere und äußere Tragarmabschnitte (13, 14) aufweist, und dass jeder am äußeren Tragarmabschnitt (14) angelenkte, arbeitende Bandrechen (B) mittels des vorderen Tragarms (12) bodenparallel annähernd über die Bandrechenlänge in etwa quer zur Fahrtrichtung (A) verlagerbar ist.

2. Schwaderkombination nach Anspruch 1, **dadurch gekennzeichnet, dass** der Bandrechen (B) an dessen in Fahrtrichtung (A) hinterer Seite in etwa in der Längsmitte des Bandrechens (B) an dem äußeren Tragarmabschnitt (14) angelenkt ist.

3. Schwaderkombination nach Anspruch 1, **dadurch gekennzeichnet, dass** der innere Tragarmabschnitt (13) länger ist als der äußere Tragabschnitt (14).

4. Schwaderkombination nach Anspruch 1, **dadurch gekennzeichnet, dass** die vorderen Tragarme (12) und die Bandrechen (B) in Arbeitsstellungen der Schwaderkombination zumindest weitgehend senkrecht zur Längsrichtung des Tragbalkens (1) orientiert sind.

5. Schwaderkombination nach Anspruch 1, **dadurch gekennzeichnet, dass** die Schwenkachse zwischen dem inneren Tragarmabschnitt (13) und einem Querträger (11) am Tragbalken (1), die Anlenkachse (18) zwischen dem äußeren Tragarmabschnitt (14) und dem Bandrechen (B), und die Gelenkachse des Kniegelenks (17) zumindest im Wesentlichen zueinander parallel und parallel zur Längsrichtung des Tragbalkens (1) sind.

6. Schwaderkombination nach wenigstens einem der vorhergehenden Ansprüche, **dadurch gekennzeichnet, dass** zwischen dem Tragbalken (1) oder einem Querträger (11) am Tragbalken (1) und dem inneren Tragarmabschnitt (13) ein Hubzylinder (30) und zwischen dem inneren Tragarmabschnitt (13) und dem äußeren Tragarmabschnitt (14) ein Stützzylinder (31) angeordnet sind.

7. Schwaderkombination nach Anspruch 6, **dadurch gekennzeichnet, dass** der Hubzylinder (30) oberhalb und der Stützzylinder (31) unterhalb des inneren Tragarmabschnitts (13) angeordnet sind.

8. Schwaderkombination nach Anspruch 1, **dadurch gekennzeichnet, dass** der Bandrechen (B) in Arbeitspositionen der Schwaderkombination relativ zum äußeren Tragarmabschnitt (14) um eine im äußeren Tragarmabschnitt (14) untergebrachte, annähernd bodenparallele und parallel zur Längsrichtung des Bandrechens orientierte Stellachse (19) neigungsverstellbar ist.

9. Schwaderkombination nach Anspruch 1, **dadurch gekennzeichnet, dass** jeder Bandrechen (B) durch einen Hydromotor (23) drehzahlverstellbar und/oder lastunabhängig steuerbar aus einem Hydrauliksystem (H) des Schleppers (S) antreibbar ist, und dass die Hydromotoren (23) beider Bandrechen (B) entweder in Serie oder über einen Stromteiler (47) parallel geschaltet sind.

10. Schwaderkombination nach Anspruch 1, **dadurch gekennzeichnet, dass** im Bandrechen (B) zumindest am zum Tragbalken (1) weisenden Ende ein drehantreibbarer Abstreifteller (39) vorgesehen ist, und/oder dass der Bandrechen (B) unterseitig und beiderseits im Abstand von der Anlenkachse an dem äußeren Tragarmabschnitt (14) starr oder drehbar gelagerte, bombierte Drehteller (24) aufweist.

11. Schwaderkombination nach Anspruch 1, **dadurch gekennzeichnet, dass** auf der Oberseite des Bandrechens (B) ein hochkant stehender Abweiser (28) angeordnet ist, der in Arbeitspositionen der Schwaderkombination (K) von außen in Richtung zum zum Tragbalken (1) weisenden Ende schräg entgegengesetzt zur Fahrtrichtung (A) zurückweicht.

12. Schwaderkombination nach wenigstens einem der vorhergehenden Ansprüche, **dadurch gekennzeichnet, dass** am Tragbalken (1) oder am Querträger (11) ein Verriegelungsmechanismus (R) für den in eine Vorgewendestellung oder eine Transportstellung verstellten inneren Tragarmabschnitt (13) vorgesehen ist, der hydraulisch oder mechanisch betätigbar ist, und ein Verriegelungsglied (49) zum wahlweisen Definieren der Vorgewendestellung und der Transportstellung aufweist.

13. Schwaderkombination nach wenigstens einem der vorhergehenden Ansprüche, **dadurch gekennzeichnet, dass** die Länge (L) des Tragbalkens (1) annähernd der halben maximalen Arbeitsbreite (5) entspricht und/oder kürzer ist als der zweifache Außendurchmesser (d) der Umlaufbahn jedes Schwadkreisels (7).

14. Schwaderkombination nach Anspruch 1, **dadurch gekennzeichnet, dass** die hinteren Tragarme (8) für die Schwadkreisel (7) längenverstellbar sind.

15. Schwaderkombination nach wenigstens einem der vorhergehenden Ansprüche, **dadurch gekennzeichnet, dass** zwischen dem Querträger (11) oder dem Tragbalken (1) und dem inneren oder äußeren Tragarmabschnitt (13, 14) ein Kraftspeicher (35) zum Einstellen oder Konstanthalten eines Bodenauflagedrucks des Bandrechens (B) angeordnet ist.

16. Schwaderkombination nach wenigstens einem der vorhergehenden Ansprüche, **dadurch gekennzeichnet, dass** jeder Schwadkreisel (7) oder Bandrechen (B) einzeln betreibbar ist.

17. Schwaderkombination nach wenigstens einem der vorhergehenden Ansprüche, **dadurch gekennzeichnet, dass** für die Fahrt am Vorgewende zum Ausheben und Absenken jedes Bandrechens (B) jeweils vor dem Ausheben und Absenken eines Schwadkreisels (7) eine Folgesteuerung für die vorderen und hinteren Tragarme (12, 8) vorgesehen ist.

18. Schwaderkombination nach wenigstens einem der Ansprüche 1 bis 6, **dadurch gekennzeichnet, dass** zur Steuerung der inneren und äußeren Tragarmabschnitte (13, 14) des vorderen Tragarmes (12) zwischen dem Tragbalken (1) oder dem Querträger (11) und dem inneren Tragarmabschnitt (13) ein Hubzylinder (30) und zwischen dem Tragbalken (1) oder dem Querträger (11) und dem äußeren Tragarmabschnitt (14) eine Steuerstange (55) angelenkt sind, wobei der äußere Tragarmabschnitt (14) eine Kröpfung (56) aufweist, an der die am inneren Tragarmabschnitt (13) über einen Steuerhebel (57) geführte Steuerstange (55) über einen Schwenkhebel (58) angelenkt ist.

## Claims

1. Wind rower combination (K), in particular for being mounted to the rear end of a tractor (S), comprising a carrier beam (1) oriented in travelling direction (A), at which carrier beam (1) belt rakes (B) are arranged in travelling direction frontally left and right at outside location via frontal carrier arms (12) which carrier arms (12) at least are pivotable upwardly, the belt rake (B) being oriented at least about crosswise to the travelling direction (A), and at which carrier beam (1) in travelling direction behind the belt rakes (B) a central wind rower (M) is arranged having left and right swath rotors (7) connected to the carrier beam (1) via at least upwardly pivotable rear carrier arms (8), **characterized in that** each frontal carrier arm (12) comprises inner and outer carrier arm sections (13, 14) which can be bent relative to each other in a knee joint having a joint axis (17) oriented substantially in travelling direction, and that each belt rake (B) is linked to the outer carrier arm section (14) and can be displaced in operation by means of the frontal carrier arm (12) parallel to the ground substantially over the length of the belt rake and essentially crosswise to the travelling direction (A).

2. Wind rower combination according to claim 1, **characterized in that** the belt rake (B) is linked to the outer carrier arm section (4) at a rear belt rake side in travelling direction (A) and substantially in the mid of the length of the belt rake (B).

3. Wind rower combination according to claim 1, **characterized in that** the inner carrier arm section (13) is longer than the outer carrier arm section (14).

4. Wind rower combination according to claim 1, **characterized in that** in operating positions of the wind rower combination the frontal carrier arms (12) and the belt rakes (B) are oriented at least largely perpendicular to the longitudinal direction of the carrier beam (1).

5. Wind rower combination according to claim 1, **characterized in that** the pivot axis between the inner carrier arm section (13) and a lateral beam (11) situated at the carrier beam (1), the linking axis (18) between the outer carrier arm section (14) and the belt rake (B), and the joint axis of the knee joint (17) are at least substantially parallel to each other and parallel to the longitudinal direction of the carrier beam (1).

6. Wind rower combination according to at least one of the preceding claims, **characterized in that** a lifting cylinder (30) is arranged between the carrier beam (1) or a lateral beam (11) at the carrier beam (1) and the inner carrier arm section (13), and that a support cylinder (31) is arranged between the inner carrier arm section (13) and the outer carrier arm section (14).

7. Wind rower combination according to claim 6, **characterized in that** the lifting cylinder (30) is arranged above the inner carrier arm section (13) and the support cylinder (31) is arranged underneath the inner carrier arm section (13).

8. Wind rower combination according to claim 1, **characterized in that** an inclination of the belt rake (B) can be adjusted in operating positions of the wind rower combination relative to the outer carrier arm section (14) about an adjustment axis (19) located in the outer carrier arm section (14), the adjustment axis (19) being oriented substantially parallel to the ground and parallel to the longitudinal direction of the belt rake (B).

9. Wind rower combination according to claim 1, **characterized in that** each belt rake (B) is driven by a hydro motor (23) from a hydraulic system (H) of the tractor (S) such that it can be controlled in speed and/or independent from loads, and that the hydro motors (23) of both belt rakes (B) are switched either in series or via a flow divider (47) in parallel.

10. Wind rower combination according to claim 1, **characterized in that** a strip plate (39) is arranged in the belt rake (B) at least at an end facing towards the carrier beam (1), which strip plate (39) is rotatabley driven, and/or that the belt rake (B) contains curved rotary plates (24) which are either fixed or rotatable supported at the lower side and at both sides spaced apart from the belt rake linking axis with the outer carrier arm section (14).

11. Wind rower combination according to claim 1, **characterized in that** an upwardly protruding deflector (28) is arranged on the upper side of the belt rake (B) which deflector (28) is set back obliquely in operating positions of the wind rower combination (K) from outwards in a direction towards the end facing the carrier beam (1) and counter to the travelling direction (A).

12. Wind rower combination according to at least one of the preceding claims, **characterized in that** for the inner carrier arm section (13) a blocking mechanism (R) is provided at the carrier beam (1) or at the lateral beam (11), when the inner carrier arm section (13) is brought either in a headland position or in a transport position, which locking mechanism (R) is actuable hydraulically or mechanically, and which comprises a locking member (49) selectively defining the headland position and the transport position.

13. Wind rower combination according to at least one of the preceding claims, **characterized in that** the length (L) of the carrier beam (1) corresponds substantially to the half of the maximum operating width (5) and/or is shorter than the twofold outer diameter (D) of the orbit course of each swath rotor (7).

14. Wind rower combination according to claim 1, **characterized in that** the rear carrier arms (8) of the swath rotors (7) can be adjusted in length.

15. Wind rower combination according to at least one of the preceding claims, **characterized in that** a force accumulator (35) either for adjusting or for maintaining a constant ground pressure of the belt rake (B) is arranged between the lateral beam (11) or the carrier beam (1) and the inner or the outer carrier arm section (13, 14).

16. Wind rower combination according to at least one of the preceding claims, **characterized in that** each swath rotor (7) or each belt rake (B) can be operated alone.

17. Wind rower combination according to at least one of the preceding claims, **characterized in that** a sequence control system is provided for the frontal and rear carrier arms (12, 8) for lifting and lowering each belt rake (B) respectively prior to lifting and lowering a swath rotor (7) for a travel situation at a headland.

18. Wind rower combination according to at least one of claims 1 to 6, **characterized in that** for controlling the inner and outer carrier arm sections (13,14) of the frontal carrier arm (12) a lifting cylinder (30) is arranged between the carrier beam (1) or the lateral beam (11) and the inner carrier arm section (13), and a control rod (55) is linked between the carrier beam (1) or the lateral beam (11) and the outer carrier arm section (14), wherein the outer carrier arm (14) has a bent (56) to which the control rod (55) is linked via a pivot lever (58), the control rod (55) being guided at the inner carrier arm section (13) via another control lever (57).

## Revendications

1. Combinaison d'andaineurs (K), en particulier pour un équipement arrière au niveau d'un tracteur (S), avec un balancier (1) orienté dans le sens de la marche (A), au niveau duquel des râteaux (B) situés à l'extérieur à gauche et à droite à l'avant dans le sens de la marche sont orientés au moins à peu près transversalement par rapport au sens de la marche (A) par l'intermédiaire de bras porteurs (12) avants pouvant au moins pivoter vers le haut et un andaineur central (M), situé à l'arrière dans le sens de la marche, avec des rotors d'andainage (7), à gauche et à droite de balancier (1), raccordés par l'intermédiaire de bras porteurs (8) arrières pouvant au moins pivoter vers le haut, **caractérisée en ce que** chaque bras porteur (12) avant présente des sections de bras porteur (13, 14) intérieure et extérieure pouvant être coudées les unes par rapport aux autres par l'intermédiaire d'une genouillère comportant un axe d'articulation (17) orienté essentiellement dans le sens de la marche (A), et chaque râteau (B) articulé au niveau de la section de bras porteur (14) extérieure, en fonctionnement, peut être déplacé à peu près transversalement par rapport au sens de la marche (A) approximativement sur la longueur du râteau et avant de manière parallèle au sol au moyen du bras porteur (12).

2. Combinaison d'andaineurs selon la revendication 1, **caractérisé en ce que** le râteau (B) est articulé au niveau de la section de bras porteur (14) extérieure à peu près à la moitié de la longueur du râteau (B) au niveau du côté arrière dudit râteau dans le sens de la marche (A).

3. Combinaison d'andaineurs selon la revendication 1, **caractérisé en ce que** la section de bras porteur (13) intérieure est plus longue que la section de bras porteur (14) extérieure.

4. Combinaison d'andaineurs selon la revendication 1, **caractérisé en ce que** les bras porteurs (12) avants et les râteaux (B), dans des positions de travail de la combinaison d'andaineurs, sont orientés au moins principalement de manière perpendiculaire au sens longitudinal du balancier (1).

5. Combinaison d'andaineurs selon la revendication 1, **caractérisé en ce que** les axes de pivotement entre la section de bras porteur (13) intérieure et un élément porteur transversal (11) au niveau du balancier (1), les axes d'articulation (18) entre la section de bras porteur (14) extérieure et le râteau (B), et l'axe d'articulation de la genouillère (17) sont au moins essentiellement parallèles les uns aux autres et parallèles au sens longitudinal du balancier (1).

6. Combinaison d'andaineurs selon l'une quelconque des revendications précédentes, **caractérisé en ce qu'**un vérin (30) est agencé entre le balancier (1) ou un élément porteur transversal (11) au niveau du balancier (1) et la section de bras porteur (13) intérieure et un cylindre de soutènement (31) est agencé entre la section de bras porteur (13) intérieure et la section de bras porteur (14) extérieure.

7. Combinaison d'andaineurs selon la revendication 6, **caractérisé en ce que** le vérin (30) est agencé au-dessus de la section de bras porteur (13) intérieure et le cylindre de soutènement (31) est agencé en dessous de la section de bras porteur (13) intérieure.

8. Combinaison d'andaineurs selon la revendication 1, **caractérisé en ce que** le râteau (B), dans des positions de travail de la combinaison d'andaineurs, peut être réglé en inclinaison par rapport à la section de bras porteur (14) extérieure autour d'un axe de réglage (19) orienté de manière parallèle au sens longitudinal du râteau et approximativement parallèle au sol et situé dans la section de bras porteur (14) extérieure.

9. Combinaison d'andaineurs selon la revendication 1, **caractérisé en ce que** chaque râteau (B) peut être entraîné avec une possibilité d'ajustement de sa vitesse de rotation grâce à un moteur hydraulique (23) et/ou avec une possibilité de commande indépendamment de la charge à partir d'un système hydraulique (H) du tracteur (S), et les moteurs hydrauliques (23) des deux râteaux (B) sont commutés en série, ou bien en parallèle par l'intermédiaire d'un diviseur de débit (47).

10. Combinaison d'andaineurs selon la revendication 1, **caractérisé en ce qu'**un disque racleur (39) pouvant être entraîné en rotation est prévu dans le râteau (B) au moins au niveau d'une extrémité tournée vers le balancier (1), et/ou le râteau (B) présente, sur le dessous et des deux côtés à une distance de l'axe d'articulation au niveau de la section de bras porteur (14) extérieure, des disques rotatifs (24) bombés, montés rigides ou orientables.

11. Combinaison d'andaineurs selon la revendication 1, **caractérisé en ce qu'**un déflecteur (28) en position debout est agencé sur le côté supérieur du râteau (B), ledit déflecteur ramenant, dans des positions de travail, la combinaison d'andaineurs (K) de manière oblique opposée au sens de la marche (A), depuis l'extérieur en direction de l'extrémité tournée vers le balancier (1).

12. Combinaison d'andaineurs selon l'une quelconque des revendications précédentes, **caractérisé en ce qu'**un mécanisme de verrouillage (R) pour la section de bras porteur (13) intérieure réglée dans une position de fourrière ou une position de transport est prévu au niveau du balancier (1) ou au niveau de l'élément porteur transversal (11), ledit mécanisme pouvant être actionné de manière hydraulique ou mécanique, et présente un organe de verrouillage (49) pour une définition sélective de la position de fourrière et de la position de transport.

13. Combinaison d'andaineurs selon l'une quelconque des revendications précédentes, **caractérisé en ce que** la longueur (L) du balancier (1) correspond approximativement à la moitié de la largeur maximale de travail (5) et/ou est plus courte que le double du diamètre extérieur (d) de l'orbite de chaque rotor d'andainage (7).

14. Combinaison d'andaineurs selon la revendication 1, **caractérisé en ce que** les bras porteurs (8) arrières pour le rotor d'andainage (7) peuvent être réglés en longueur.

15. Combinaison d'andaineurs selon l'une quelconque des revendications précédentes, **caractérisé en ce qu'**un accumulateur d'énergie (35) destiné à l'ajustement ou au maintien d'une constante de pression d'appui sur le sol du râteau (B) est agencé entre l'élément porteur transversal (11) ou le balancier (1) et la section de bras porteur (13, 14) intérieure ou extérieure.

16. Combinaison d'andaineurs selon l'une quelconque des revendications précédentes, **caractérisé en ce que** chaque rotor d'andainage (7) ou râteau (B) peut fonctionner de manière individuelle.

17. Combinaison d'andaineurs selon l'une quelconque des revendications précédentes, **caractérisé en ce qu'**une commande séquentielle est prévue pour les bras porteurs (12, 8) avant et arrière lors de la progression en fourrière en vue d'un relèvement et d'un abaissement de chaque râteau (B) respectivement avant le relèvement et l'abaissement d'un rotor d'andainage (7).

18. Combinaison d'andaineurs selon l'une quelconque des revendications 1 à 6, **caractérisé en ce qu'**un vérin (30) est articulé entre le balancier (1) ou l'élément porteur transversal (11) et la section de bras porteur (13) intérieure en vue d'une commande des sections de bras porteur (13, 14) intérieure et extérieure du bras porteur (12) avant et une barre de manoeuvre (55) est articulée entre le balancier (1) ou l'élément porteur transversal (11) et la section de bras porteur (14) extérieure, la section de bras porteur (14) extérieure présentant un coude (56) au niveau duquel la barre de manoeuvre (55) guidée par l'intermédiaire d'un levier de manoeuvre (57) au niveau de la section de bras porteur (13) intérieure est articulée par l'intermédiaire d'un levier pivotant (58).
